# EUROPÄISCHE PATENTSCHRIFT

(11) **EP 0 890 716 B1**
(45) Veröffentlichungstag und Bekanntmachung des Hinweises auf die Patenterteilung: **12.12.2001**
(21) Anmeldenummer: 98111674.2
(22) Anmeldetag: 25.06.1998
(51) Int. Cl.: F01N 7/00, F01N 9/00, F02D 41/02

(54) **Verfahren zum Betrieb eines Verbrennungsmotors mit Überwachung der Katalysatoraktivität**
Method of operating an internal combustion engine with monitoring of the activity of the catalytic converter
Procédé pour le fonctionnement d'un moteur à combustion interne avec surveillance de l' activité du catalyseur

(30) Priorität: 08.07.1997 DE 19729087
(43) Veröffentlichungstag der Anmeldung: 13.01.1999
(73) Patentinhaber: Ford Global Technologies, Inc. Suite 611, Parklane Towers East,, Dearborn, Michigan 48126 (US)
(72) Erfinder: Mayer, Thomas E., 50996 Köln (DE); Grieser, Klemens, 40764 Langenfeld (DE)
(74) Vertreter: Bonsmann, Manfred, Dipl.-Ing.

(56) Entgegenhaltungen:
- EP-A- 0 499 207
- EP-A- 0 719 937
- EP-A- 0 725 211
- WO-A-91/16529
- US-A- 3 949 551
- US-A- 4 574 588
- US-A- 5 050 551
- US-A- 5 207 058
- US-A- 5 390 491
- US-A- 5 577 383
- US-A- 5 642 705

## Beschreibung

Die Erfindung betrifft ein Verfahren zum Betrieb eines Verbrennungsmotors mit einer Abgasbehandlungsanordnung und einer elektronischen Motorsteuerung.

Ein bekanntes Problem bei Katalysatoren besteht darin, daß die aktiven Substanzen eine bestimmte Aktivitätsgrenztemperatur erreicht haben müssen, damit eine Abgasreinigung stattfinden kann. Unterhalb dieser Grenztemperatur ist der Abgasreinigungswirkungsgrad nahezu null. Es muß deshalb vor allem nach einem Kaltstart des Verbrennungsmotors für ein möglichst schnelles Aufheizen (sog. schnelles Anspringverhalten) des Katalysators Sorge getragen werden, damit die gerade anfänglich hohen Motoremissionen bereits nach kurzer Zeit gesenkt werden können.

Hierzu ist es bekannt, durch motorinterne Maßnahmen die Abgastemperatur künstlich zu erhöhen, wie z.B. durch eine Zündungsspätverstellung gegenüber dem wirkungsgradoptimalen Zündzeitpunkt oder durch eine Erhöhung der Leerlaufdrehzahl. Diese Maßnahmen werden bei bekannten Motorsteuerungsverfahren für eine vorgegebene Zeitspanne nach dem Motorstart durchgeführt. Diese Zeitspanne wird so bemessen, daß für einen vorgesehenen Katalysatortyp über dessen gesamte Lebensdauer ein Aufheizen auf die Aktivitätsgrenztemperatur gewährleistet wird. Diese Zeitspanne kann aber durch Exemplarschwankungen und alterungsbedingt schwanken. So benötigt ein neuwertiger Katalysator typischerweise eine Anspringphase von lediglich 15 s Dauer, wohingegen ein einem Fahrbetrieb von 100.000 km ausgesetzter Katalysator gleichen Typs bereits eine Anspringphase von 40 s benötigen kann. Da die motorinternen Maßnahmen zur Erhöhung der Abgastemperatur allgemein zu einem erhöhten Kraftstoffverbrauch führen, ist es wünschenswert, das tatsächliche Erreichen der Aktivitätsgrenztemperatur der Abgasbehandlungsanordnung zu erkennen und die Maßnahmen zur Abgastemperaturerhöhung nur solange durchzuführen, wie es zum Erreichen dieser Temperatur erforderlich ist.

Zu diesem Zweck ist es bekannt, mit Hilfe einer Überwachung der Temperatur der Abgase vor oder hinter dem Katalysator sicherzustellen, daß die Abgastemperaturerhöhung nur solange durchgeführt wird, bis die Aktivitätsgrenztempratur erreicht ist. Derartige Verfahren sind zum Beispiel in der US 5,577,833, US 3,949,551 und US 4,574,588 beschrieben.

Bei Verwendung kraftstoffsparender Motorkonzepte wie Magerbetrieb und Direkteinspritzung kann es weiterhin vorkommen, daß der Katalysator, nachdem dieser bereits die Anspringtemperatur überschritten hatte, "ausgeht", d.h., daß die Temperatur unter die Aktivitätsgrenztemperatur absinkt. Um dies zu vermeiden, sind motorinterne Maßnahmen zur Erhöhung der Abgastemperatur (z.B. Abschaltung des Magerbetriebs) erforderlich.

Diesbezüglich offenbaren die EP 0 719 937 A2, WO 91/16529 A, US 5,050,551, EP 0 725 211 A1 und US 5,207,058 Verfahren, bei denen nach der Startphase während des Motorbetriebs die Temperatur der Abgase gemessen und bei Unterschreiten eines Schwellwertes motorinterne Maßnahmen zur Erhöhung der Abgastemperatur initiiert werden. Ein derartiges Verfahren zeigt auch die US 5,642,705, wobei in einer dort als "fünfte Ausgestaltung" bezeichneten Variante (Figuren 20 und 21) offenbart wird, während der Startphase des Motors eine erste Zieltemperatur von typischerweise 400°C vorzugeben, die sich von der zieltemperatur während des normalen Betriebes unterscheidet. Letztere soll dabei unter 400°C liegen.

Das Erreichen der Zieltemperatur der Abgase wird mit einem Temperatursensor überwacht, welcher im Strömungsweg vor dem Katalysator angeordnet ist.

Die Aufgabe der vorliegenden Erfindung besteht darin, mit möglichst geringem Aufwand die individuelle Aktivitätsgrenze eines Katalysators zu erkennen, so daß die Dauer der Anspringphase den tatsächlichen Erfordernissen angepaßt und ein Ausgehen des Katalysators während des Motorbetriebes vermieden werden kann.

Diese Aufgabe wird durch ein Verfahren mit dem Merkmalen des Anspruchs 1 sowie ein Verfahren mit den Merkmalen des Anspruchs 7 gelöst.

Das erstgenannte Verfahren weist die Merkmale auf, daß während des Motorbetriebs die Abgastemperatur in Strömungsrichtung hinter wenigstens einem Katalysatorelement der Abgasbehandlungsanordnung gemessen und mit wenigstens einem vorgegebenen Schwellwert verglichen wird, der oberhalb der Aktivitätsgrenztemperatur des Katalysatorelements liegt, und daß von der elektronischen Motorsteuerung Maßnahmen zur Erhöhung der Abgastemperatur getroffen werden, sofern die gemessene Abgastemperatur unterhalb des Schwellwertes liegt.

Durch die Messung der Abgastemperatur in Strömungsrichtung hinter wenigstens einem Katalysatorelement kann detektiert werden, ob das durchströmte Katalysatorelement vom nicht aktiven in den aktiven Zustand übergegangen ist, da durch die bei Aktivität im Katalysatorelement ablaufenden exothermen chemischen Reaktionen Wärmeenergie freigesetzt wird, was zu einem relativ raschen Anstieg der Abgastemperatur hinter dem Katalysatorelement führt, wodurch der vorgegebene Schwellwert relativ schnell nach Beginn der Katalysatoraktivität überschritten wird. Umgekehrt können beim Unterschreiten des Schwellwertes Maßnahmen zur Erhöhung der Abgastemperatur getroffen werden, so daß ein Ausgehen des Katalysatorelements verhindert wird.

In vorteilhafter Ausgestaltung der Erfindung kann vorgesehen sein, daß der Temperaturschwellwert wenig größer als die maximale Aktivitätsgrenztemperatur, die bei dem verwendeten Abgasbehandlungsanordnungtyp über die gesamte Lebensdauer auftreten kann, gewählt wird. Dadurch wird unabhängig von Exemplarschwankungen und dem Alterungszustand der Abgasbehandlungsanordnung eine Aktivität nur dann detektiert, wenn diese auch tatsächlich vorliegt. Dadurch, daß der Temperaturschwellwert nur wenig größer als die maximale Aktivitätsgrenztemperatur gewählt wird, ist eine schnelle und zuverlässige Aktivitätsdetektion möglich.

Im Rahmen der Erfindung ist vorgesehen, daß unmittelbar nach dem Start des Verbrennungsmotors in einer Anspringphase Maßnahmen zur Erhöhung der Abgastemperatur getroffen werden, bis die gemessene Temperatur einen vorgegebenen Schwellwert T₁ überschreitet, um ein möglichst schnelles Aufheizen der Abgasbehandlungsanordnung zu erreichen.

Es ist weiterhin vorgesehen, daß nach der Anspringphase bei Unterschreiten eines Schwellwertes T₂ Maßnahmen zur Erhöhung der Abgastemperatur getroffen werden, bis der Schwellwert T₂ wieder erreicht wird, um die Aktivität der Abgasbehandlungsanordnung während des Motorbetriebs dauerhaft aufrecht zu erhalten. Dadurch, daß erst nach Unterschreiten des Schwellwerts T₂ Maßnahmen zur Erhöhung der Abgastemperatur getroffen werden, kann die Wärmekapazität und die Reaktionswärme der Abgasbehandlungsanordnung zur Überbrückung von Betriebsphasen mit niedriger Abgastemperatur genutzt werden. Sinkt die Abgastemperatur in Strömungsrichtung vor dem Katalysatorelement unter die Aktivitätsgrenztemperatur ab (z.B. in Leerlaufphasen), so bleibt die Abgastemperatur hinter dem Katalysatorelement aufgrund der Wärmekapazität und der Reaktionswärme für eine bestimmte Zeit oberhalb des Schwellwertes, so daß für diese Zeit kein Kraftstoffmehrverbrauch infolge einer gezielten Erhöhung der Abgastemperatur auftritt.

Dabei ist erfindungsgemäß vorgesehen, daß der Schwellwert T₂ größer als der Schweliwert T₁ ist. Dadurch wird berücksichtigt, daß das Abschalten der Temperaturerhöhungsmaßnahmen im Falle eines Überschreitens von T₁ bzw. das Einleiten von Temperaturerhöhungsmaßnahmen im Falle eines Unterschreitens von T₂ erst mit einer gewissen zeitlichen Verzögerung wirkt.

Als Maßnahme zur Erhöhung der Abgastemperatur kann eine Zündungsspätverstellung vorgesehen sein.

Zusätzlich kann zu diesem Zweck eine Vergrößerung der Leerlaufdrehzahl erfolgen, falls der Motor gerade im Leerlauf betrieben wird.

Auch kann in diesem Falle eine Umschaltung in einen Betrieb mit einem stöchiometrischen oder fetten Luft-/Kraftstoffverhältnis anstatt eines Magerbetriebs vorgesehen sein.

Insbesondere bei Anwendung des erfindungsgemäßen Verfahrens im Bereich der Benzin-Direkteinspritzmotoren kann die Erhöhung der Abgastemperatur auch durch Übergang von einem Betrieb mit sehr magerem Luft-/Kraftstoffverhältnis auf ein weniger mageres Luft-/Kraftstoffverhältnis erreicht werden, wobei vorzugsweise gleichzeitig von einem Schichtladebetrieb auf einen homogenen Ladebetrieb übergegangen wird.

Die Erfindung wird nachfolgend anhand der Zeichnungen beispielhaft näher erläutert. Es zeigen:
- Fig. 1: eine stark schematisierte Darstellung einer Anordnung zur Durchführung des erfindungsgemäßen Verfahrens,
- Fig. 2: ein schematisches Temperatur-Zeitdiagramm zur Erläuterung der Aufheizphase gemäß dem erfindungsgemäßen Verfahren, und
- Fig. 3: ein schematisches Temperatur-zeitdiagramm zur Erläuterung der erfindungsgemäßen Überwachung der Katalysatoraktivität nach der Aufheizphase.

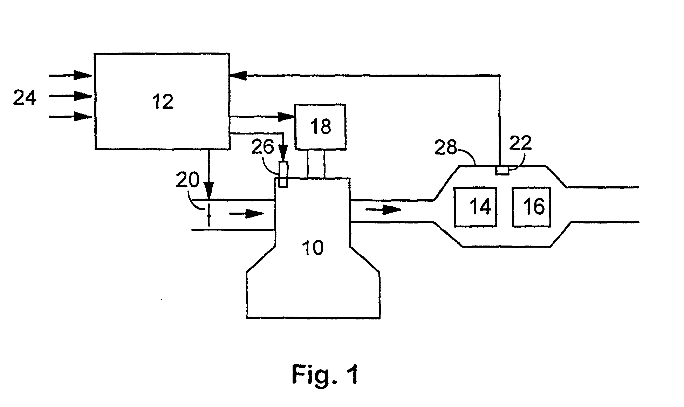

Gemäß Fig. 1 wird ein Mehrzylinderverbrennungsmotor 10 von einer elektronischen Motorsteuerung 12, die eine Vielzahl von Eingangssignalen 24, wie z.B. die aktuelle Motordrehzahl oder die aktuelle Stellung des Fahrergaspedals erhält, gesteuert. Die Motorsteuerung steuert über eine elektronische Drosselklappe 20, eine Einspritzanlage 26 und eine Zündanlage 18 u.a. das dem Motor zugeführte Luft/Kraftstoffverhältnis sowie die Zündzeitpunkte. Die Motorabgase werden einer Abgasbehandlungsanordnung 28 zugeführt. Diese kann z.B. aus einem Dreiwegekatalysator 14 und einer Stickoxidfalle 16 zur Reduzierung der Stickoxidemissionen im Magerbetrieb bestehen. Durch einen Temperatursensor 22 wird die Abgastemperatur im Abgasströmungsweg hinter dem Dreiwegekatalysator 14 und vor der Stickoxidfalle 16 gemessen. Durch diese Anordnung des Temperatursensors wird erfindungsgemäß die Aktivität des Dreiwegekatalysators 14 überwacht. Darüber hinaus kann der Temperatursensor gleichzeitig zur Temperaturregelung der Stickoxidfalle 16 benutzt werden.

Eine Implementierung des erfindungsgemäßen Verfahrens beginnt mit dem Start des Verbrennungsmotors und der Einleitung von Maßnahmen zur Abgastemperaturerhöhung wie z.B. einer Zündungsspätverstellung, um ein schnelles Anspringen des Katalysatorelements 14 zu erreichen. Das Ende der Anspringphase ist erreicht, wenn die hinter dem Katalysatorelement gemessene Temperatur T_{nach} eine vorgegebene Temperaturschwelle T₁ überschreitet. Danach werden die Temperaturerhöhungsmaßnahmen beendet. Falls während des Motorbetriebes die Temperatur T_{nach} eine Temperaturschwelle T₂ unterschreitet, werden erneut Maßnahmen zur Abgastemperaturerhöhung getroffen, bis die Temperaturschwelle T₂ wieder erreicht ist.

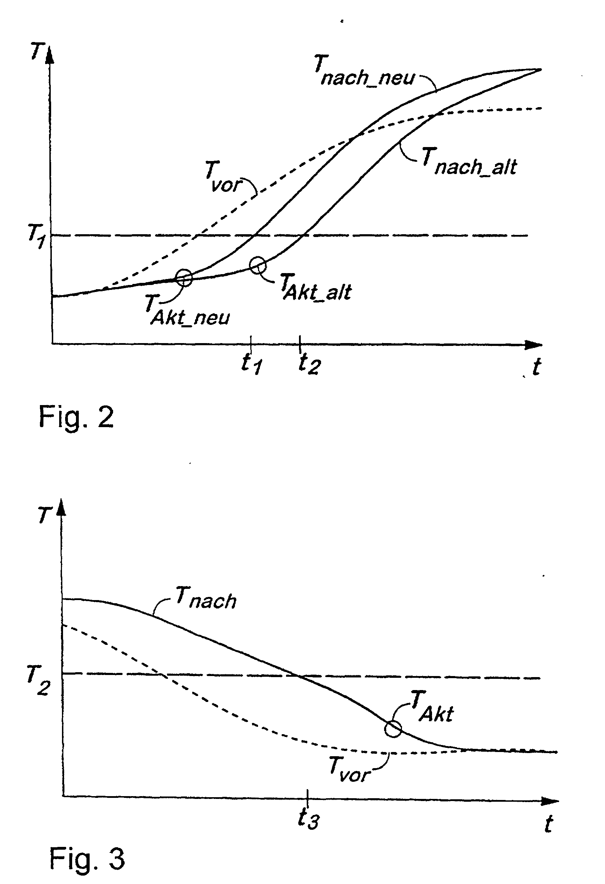

In Fig. 2 ist der zeitliche Abgastemperaturverlauf vor dem Katalysatorelement (Tᵥₒᵣ) sowie in Strömungsrichtung hinter dem Katalysatorelement für zwei Katalysatoren unterschiedlichen Alterungsgrades (T_{nach_neu} bzw. T_{nach_alt}) während der Aufheizphase des Katalysatorelements schematisch dargestellt. Die Abgastemperatur vor dem Katalysatorelement steigt nach dem Motorstart zunächst schneller an als die Temperatur hinter dem Katalysatorelement, da dieser zunächst aufgeheizt wird und dabei das Abgas abkühlt. Ab den Aktivierungsgrenztemperaturen T_{Akt_neu} bzw. T_{Akt_alt} setzt jeweils die Katalysatoraktivität ein. Durch die dabei entstehende Reaktionswärme steigt die Katalysatortemperatur und damit die Abgastemperatur hinter dem Katalysatorelement schneller an als die Abgastemperatur vor dem Katalysatorelement. Durch den schnellen Anstieg wird nach Ablauf einer relativ kurzen Zeit nach Einsetzen der Katalysatoraktivität die Temperaturschwelle T₁ überschritten, wonach Maßnahmen zur Erhöhung der Abgastemperatur wie z.B. eine Zündungsspätverstellung oder eine Erhöhung der Leerlaufdrehzahl abgestellt werden können. Wie ersichtlich, ergibt sich gemäß dem erfindungsgemäßen Verfahren für den neueren Katalysator eine kürzere Anspringphase als für den älteren Katalysator, so daß der individuelle Zustand des Katalysators berücksichtigt wird.

In Fig. 3 ist der zeitliche Abgastemperaturverlauf vor und hinter einem Katalysatorelement für den Fall eines Absinkens der Abgastemperatur (z.B. im Leerlaufbetrieb) dargestellt. Bei einem derartigen Absinken der Abgastemperatur Tᵥₒᵣ vor dem Katalysator sinkt die Temperatur hinter dem Katalysator T_{nach} aufgrund der Wärmekapazität des Katalysators und der noch entstehenden Reaktionswärme nur langsam ab. Ab einer vorgegebenen Grenztemperatur T₂ (>T₁) werden zu einem Zeitpunkt t₃ von der Motorsteuerung Maßnahmen zur Erhöhung der Abgastemperatur getroffen. Falls solche Maßnahmen nicht getroffen werden, geht der Katalysator bei Unterschreiten der Aktivitätsschwelle T_{Akt} aus, wie in Fig. 3 dargestellt.

Alternativ ist es zur Lösung der erfindungsgemäßen Aufgabenstellung im Hinblick auf eine noch genauere Bestimmung des Beginns der Katalysatoraktivität auch möglich, den zeitlichen Gradienten der Temperatur hinter dem Katalysator zu bestimmen. Das Überschreiten einer vorgegebenen Anstiegsgeschwindigkeit deutet darauf hin, daß die katalytischen Reaktionen eingesetzt haben und daß dementsprechend Maßnahmen zur Abgastemperaturerhöhung abgestellt werden können. Der Zeitpunkt des Ausgehens eines Katalysators läßt sich auch anhand des zeitlichen Gradienten der Abgastemperatur hinter dem Katalysator bestimmen.

## Patentansprüche

1. Verfahren zum Betrieb eines Verbrennungsmotors (10) mit einer Abgasbehandlungsanordnung (28) und einer elektronischen Motorsteuerung (12), wobei während des Motorbetriebs die Abgastemperatur gemessen und mit zwei vorgegebenen Schwellwerten (T₁, T₂) verglichen wird, die oberhalb der Aktivitätsgrenztemperatur des Katalysatorelements liegen, wobei
unmittelbar nach dem Start des Verbrennungsmotors in einer Anspringphase der Abgasbehandlungsanordnung von der Motorsteuerung Maßnahmen zur Erhöhung der Abgastemperatur getroffen werden, bis die gemessene Temperatur den vorgegebenen Schwellwert T₁ überschreitet, um ein möglichst schnelles Aufheizen der Abgasbehandlungsanordnung zu erreichen, und wobei
nach der Anspringphase während des Motorbetriebs, bei dem die Abgastemperatur den Temperaturschwellwert T₂ erreicht hat, bei Unterschreiten des Temperaturschwellwertes T₂ von der Motorsteuerung Maßnahmen zur Erhöhung der Abgastemperatur getroffen werden, bis der Schwellwert T₂ wieder erreicht wird, um die Aktivität der Abgasbehandlungsanordnung während des Motorbetriebs dauerhaft aufrecht zu erhalten,
**dadurch gekennzeichnet, daß** die Abgastemperatur in Strömungsrichtung hinter wenigstens einem Katalysatorelement (14) der Abgasbehandlungsanordnung gemessen wird und daß der Schwellwert T₂ größer als der Schwellwert T₁ ist.

2. Verfahren nach Anspruch 1, **dadurch gekennzeichnet, daß** die Temperaturschwellwerte T₁, T₂ wenig größer als die maximale Aktivitätsgrenztemperatur, die bei dem verwendeten Abgasbehandlungsanordnungtyp über die gesamte Lebensdauer auftreten kann, gewählt werden.

3. Verfahren nach Anspruch 1 oder 2, **dadurch gekennzeichnet, daß** die Erhöhung der Abgastemperatur durch eine Zündungsspätverstellung bewirkt wird.

4. Verfahren nach einem der Ansprüche 1 bis 3, **dadurch gekennzeichnet, daß** die Erhöhung der Abgastemperatur durch eine Vergrößerung der Leerlaufdrehzahl bewirkt wird, falls der Motor im Leerlauf betrieben wird.

5. Verfahren nach einem der Ansprüche 1 bis 4, **dadurch gekennzeichnet, daß** die Erhöhung der Abgastemperatur durch eine Umschaltung in einen Betrieb mit einem stöchiometrischen oder fetten Luft-/Kraftstoffverhältnis anstatt eines Magerbetriebs bewirkt wird.

6. Verfahren nach einem der Ansprüche 1 bis 5, **dadurch gekennzeichnet, daß** die Erhöhung der Abgastemperatur durch ein Verstellen des Luft-/Kraftstoffverhältnisses in Richtung eines weniger mageren Betriebes anstatt eines Magerbetriebs bewirkt wird.

7. Verfahren zum Betrieb eines Verbrennungsmotors (10) mit einer Abgasbehandlungsanordnung (28) und einer elektronischen Motorsteuerung (12), wobei während des Motorbetriebs die Abgastemperatur gemessen wird, und wobei von der elektronischen Motorsteuerung (12) Maßnahmen zur Erhöhung der Abgastemperatur getroffen werden, **dadurch gekennzeichnet,**
**daß** die Abgastemperatur in Strömungsrichtung hinter wenigstens einem Katalysatorelement (14) der Abgasbehandlungsanordnung gemessen wird und daß die Maßnahmen zur Abgastemperaturerhöhung abgestellt werden, wenn der zeitliche Gradient der Temperatur hinter dem Katalysator element einen vorgegebenen Wert überschreitet.

## Claims

1. Method of operating an internal combustion engine (10) with a waste gas processing installation (28) and electronic engine control (12), whereby during the motor operation the waste gas temperature is measured and is compared with two predetermined threshold values (T₁, T₂), which lie above the activity boundary temperature of the catalytic converter element, wherein
directly after the start of the internal combustion engine in a start phase of the waste gas processing installation measures are taken by the engine control to increase the waste gas temperature until the measured temperature exceeds the predetermined threshold value T₁, in order to achieve heating-up of the waste gas processing installation as quickly as possible, and wherein
after the start phase during the engine operation, whereby the waste gas temperature has reached the temperature threshold value T₂, upon falling short of the temperature threshold value T₂ measures are taken by the engine control to increase the waste gas temperature until the threshold value T₂ is reached again, in order to maintain- the activity of the waste gas processing installation constant during engine operation,
**characterised in that** the waste gas temperature in the flow direction behind at least one catalytic converter element (14) of the waste gas processing installation is measured and that the threshold value T₂ is greater than the threshold value T₁.

2. Method according to Claim 1 **characterised in that** the temperature threshold values T1, T2 are selected to be not much greater than the maximum activity boundary temperature, which can arise with the waste gas processing installation type over the entire lifespan.

3. Method according to Claim 1 or 2 **characterised in that** the increase in the waste gas temperature is brought about by ignition retard.

4. Method according to one of the Claims 1 to 3 **characterised in that** the increase in the waste gas temperature is brought about by an increase in the idling speed if the engine is idling.

5. Method according to one of the Claims 1 to 4 **characterised in that** the increase in the waste gas temperature is brought about by switching into an operation with a stoichiometric or rich air/fuel ratio instead of lean operation.

6. Method according to one of the Claims 1 to 5 **characterised in that** the increase in the waste gas temperature is brought about by an adjustment in the air/fuel ratio in the direction of a less lean operation instead of lean operation.

7. Method of operating an internal combustion engine (10) with a waste gas processing installation (28) and electronic engine control (12), wherein during the engine operation the waste gas temperature is measured, and wherein measures are taken by the electronic engine control (12) to increase the waste gas temperature, **characterised in that** the waste gas temperature in the flow direction behind at least one catalytic converter element (14) of the waste gas processing installation is measured and that the measures to increase waste gas temperature are stopped when the time gradient of the temperature behind the catalytic converter element exceeds a predetermined value.

## Revendications

1. Procédé de fonctionnement d'un moteur à combustion interne (10) comprenant un dispositif de traitement des gaz d'échappement (28) et une commande électronique du moteur (12), dans lequel la température des gaz d'échappement est mesurée en cours de service du moteur et est comparée à deux valeurs seuil (T₁, T₂) prédéfinies, qui se situent au-dessus de la limite de la température d'activité du module catalytique, dans lequel immédiatement après le démarrage du moteur à combustion interne, dans une phase de mise en route du dispositif de traitement des gaz d'échappement, la commande du moteur active des mesures destinées à augmenter la température des gaz d'échappement jusqu'au moment où la température mesurée passe au-dessus de la valeur seuil T₁ prédéfinie, afin que le dispositif de traitement des gaz d'échappement soit chauffé si possible rapidement, et dans lequel, après la phase de mise en route en cours de service du moteur, au cours de laquelle la température des gaz d'échappement a atteint la valeur seuil T₂, dès que la température passe en dessous de la valeur seuil T₂, la commande du moteur active des mesures destinées à augmenter la température des gaz d'échappement jusqu'au moment où la valeur T₂ est à nouveau atteinte, afin que l'activité du dispositif de traitement des gaz d'échappement soit toujours maintenue en cours de service du moteur, **caractérisé en ce que** la température des gaz d'échappement est mesurée en aval, par référence au sens du flux, d'au moins un module catalytique (14) du dispositif de traitement des gaz d'échappement, et **en ce que** la valeur seuil T₂ est supérieure à la valeur seuil T₁.

2. Procédé selon la revendication 1, **caractérisé en ce que** les seuils de température T₁ et T₂ sont choisis avec des valeurs légèrement plus grandes que la limite maximale de la température d'activité, qui peut apparaître sur toute la durée de vie du type de dispositif de traitement des gaz d'échappement utilisé.

3. Procédé selon la revendication 1 ou 2, **caractérisé en ce que** l'augmentation de la température des gaz d'échappement est activée par un réglage de retard à l'allumage.

4. Procédé selon l'une quelconque des revendications 1 à 3, **caractérisé en ce que** l'augmentation de la température des gaz d'échappement est activée par une augmentation de la vitesse de rotation au ralenti, lorsque le moteur tourne au ralenti.

5. Procédé selon l'une quelconque des revendications 1 à 4, **caractérisé en ce que** l'augmentation de la température des gaz d'échappement est activée par un basculement vers un mode de fonctionnement avec un mélange air-carburant stoechiométrique ou gras, au lieu d'un régime appauvri.

6. Procédé selon l'une quelconque des revendications 1 à 5 **caractérisé en ce que** l'augmentation de la température des gaz d'échappement est activée par un réglage du mélange air-carburant dans le sens d'un régime moins pauvre, au lieu d'un régime appauvri.

7. Procédé de fonctionnement d'un moteur à combustion interne (10) comprenant un dispositif de traitement des gaz d'échappement (28) et une commande électronique du moteur (12), dans lequel la température des gaz d'échappement est mesurée en cours de service du moteur et dans lequel des mesures destinées à augmenter la température des gaz d'échappement sont activées par une commande électronique (12) du moteur,
**caractérisé en ce que** la température des gaz d'échappement est mesurée en aval, par référence au sens du flux, d'au moins un module catalytique (14) du dispositif de traitement des gaz d'échappement, et **en ce que** les mesures destinées à augmenter la température des gaz d'échappement sont inactivées lorsque le gradient de la température en fonction du temps, en aval du module catalytique, passe au-dessus d'une valeur prédéfinie.
